# EUROPEAN PATENT SPECIFICATION

(11) **EP 2 950 029 B1**
(45) Date of publication and mention of the grant of the patent: **15.03.2017**
(21) Application number: 15382244.0
(22) Date of filing: 11.05.2015
(51) Int. Cl.: F28D 20/00

(54) **Tank for storing hot water**
BEHÄLTER ZUR SPEICHERUNG VON WARMWASSER
RESERVOIR DE STOCKAGE D'EAU CHAUDE

(30) Priority: 28.05.2014 ES 201430803
(43) Date of publication of application: 02.12.2015
(73) Proprietor: ORKLI, S. COOP., 20240 Ordizia (ES)
(72) Inventor: JUARISTI VAQUERO, Asier, 31180 Zizur Mayor (ES)
(74) Representative: Igartua, Ismael

(56) References cited:
- EP-A1- 2 354 700
- EP-A2- 1 288 605
- DE-B3-102007 043 963
- DE-U1- 29 512 343
- US-A- 4 874 104

## Description

### TECHNICAL FIELD

The present invention relates to tanks for storing water, and more specifically to tanks for storing hot sanitary water.

### PRIOR ART

A number of systems and installations comprising tanks for storing water, generally pressurized water, for subsequent use thereof, such as for storing hot sanitary water, for supplying hot water to a home heating system, etc., are known.

The tanks are generally made of stainless steel, and since the water is under pressure, the tank should have a shape such that it prevents planar surfaces since it would present the risk of the pressure applied by said water being focused at a particular point, causing the tank itself to burst. Known solutions have a cylindrical tank, arranged horizontally or vertically, the diameter of which depends on the capacity to be given to the tank, which can be problematic for storing large amounts of water due to the dimensions that it could take up.

Tanks which are arranged in a planar manner are also known, in which a plurality of adjacent hollow tubular segments are attached to one another forming rows such that space is saved. The water is stored in said tubular segments.

In this sense, patent document EP2354700 A1 discloses a tank for storing pressure water comprising a plurality of hollow tubular segments which are arranged adjacent and attached to one another forming rows, the segments forming the main body of the tank where the water is stored. The tank also comprises a cover arranged at each end of the main body enabling closure of the tank, an intake through which water is introduced into the tank and an outlet through which water is discharged from the tank for use thereof. Two contiguous tubular segments are communicated through passage ports arranged in the covers of the two ends.

### DISCLOSURE OF THE INVENTION

The object of the invention is to provide a tank for storing hot water, as defined in claim 1. Further embodiments are described in the dependent claims.

The tank for storing hot water of the invention comprises a tank body where the water is stored. Said tank body comprises a plurality of hollow tubular segments which are arranged adjacent and attached to one another forming rows such that a first tubular segment is arranged in a first row and a last tubular segment is arranged in a last row, higher than the first row. The tank also comprises a cover at each end of the tank body enabling closure of the tank, a main intake arranged in the first tubular segment and through which pressurized water is introduced into the tank, preferably from the supply system, and a main outlet arranged in the last tubular segment and through which water is discharged from the tank for use thereof, allowing the communication between two contiguous tubular segments through passage ports arranged in at least one of the covers. The first tubular segment and the last tubular segment are communicated through a bridge conduit which is arranged on one of the sides of the tank.

On one hand, the tank of the invention saves space as a result of its planar configuration, i.e., as a result of the tubular segments being arranged forming adjacent rows, which thereby prevents using cylindrical tanks having a considerable diameter. On the other hand, it also drastically reduces the time necessary for the hot water, i.e., the water treated for use thereof, to be available at the outlet point. In the tank of the invention, the hot water, i.e., the water ready for use thereof, does not have to gradually ascend as the tubular segments are filled, but rather as a result of the bridge conduit said water heads directly for the area closer to the outlet point where it will be stockpiled until consumption thereof is required, such that it is the first water to come out.

These and other advantages and features of the invention will become evident in view of the drawings and detailed description of the invention.

### DESCRIPTION OF THE DRAWINGS

Figure 1 shows a perspective view of an embodiment of the tank for storing hot water according to the invention.
Figure 2 is a diagram of the static operation of the tank of Figure 1.
Figure 3A is a front view of one of the covers of the tank of Figure 1.
Figure 3B is a front view of the other cover of the tank of Figure 1.
Figure 4 is a section view of one of the double covers of the cover of Figure 3B.
Figure 5A is a first section view of the cap of the single cover, associated with the first tubular segment, of the cover of Figure 3A, with the gate in the active position.
Figure 5B is a second section view of the cap of the single cover, associated with the first tubular segment, of the cover of Figure 3A, with the gate in the rest position.

### DETAILED DISCLOSURE OF THE INVENTION

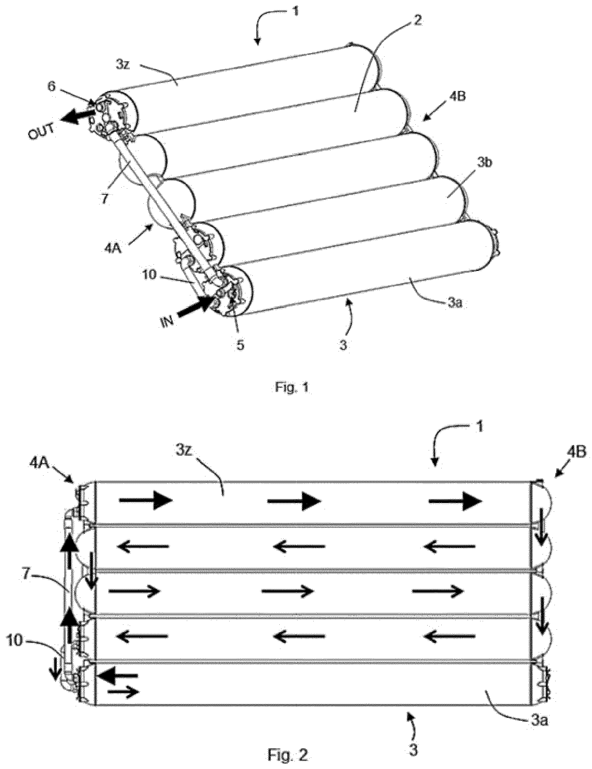

Figure 1 shows an embodiment of the tank 1 for storing hot water of the invention. As can be seen in said drawing, the tank 1 comprises a tank body 2 where the water is stored. Said tank body 2 comprises a plurality of hollow tubular segments 3 which are arranged adjacent and attached to one another forming rows, preferably in one and the same column, such that a first tubular segment 3a is arranged in a first row and a last tubular segment 3z is arranged in a last row, higher than the first row. The tank 1 also comprises a cover 4A and 4B at each end of the tank body 2 enabling closure of the tank 1, a main intake 5 arranged in the first tubular segment 3a and through which pressurized water is introduced into the tank 1, preferably from the supply system, and a main outlet 6 arranged in the last tubular segment 3z and through which water is discharged from the tank 1 for use thereof, allowing the communication between two contiguous tubular segments 3 through passage ports 9 arranged in at least one of the covers 4A or 4B. The first tubular segment 3a and the last tubular segment 3z are likewise communicated through a bridge conduit 7 which is arranged on one of the sides of the tank 1.

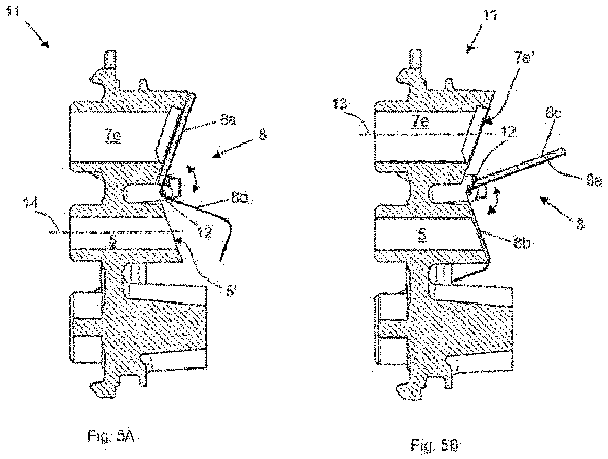

As can be seen in the example of Figure 1, the bridge conduit 7 is arranged on the side of the tank 1 where the main intake 5 is arranged, although it could also be placed on the opposite side. One end of said bridge conduit 7 is associated with an inlet port 7e, shown in further detail in Figures 5A and 5B, which is in turn associated with the first tubular segment 3a, and the other end is associated with the last tubular segment 3z.

On one hand, the tank 1 according to the invention saves space as a result of its planar configuration, i.e., the thickness of the tank is less than the length of the tank. The tubular segments 3 are arranged forming adjacent rows, which thereby prevents using cylindrical tanks having a considerable diameter. This configuration allows placing the tank 1 in any space of a building that can be used, such as, for example, on the roof, on outer walls of the façade, on inner walls, etc.

On the other hand, the tank 1 also drastically reduces the time necessary for the hot water, i.e., the water treated or ready for use thereof, to be available at the outlet point, such that it can seamlessly meet the sanitary water consumption demand without using additional heating or adjustment means, external to the tank 1, for heating or adjusting the water.

The tank 1 of the invention is suitable for being arranged on the outer façade, or on a wall of the building, placed upright, i.e., at 90° with respect to the ground or lying down, maintaining a degree of inclination between 10° and 90°; therefore it is also suitable for being arranged on the roof of the building, thereby making use of solar energy for heating the water in the tank 1.

Tanks of this type, like the one described for the embodiment of the tank 1, are normally arranged attached to the façade of the building, preferably on the roof, to heat the water in the tank by making use of solar energy. These tanks are usually connected to an auxiliary heating system, such as for example a water boiler, located at a point closer to the consumption point, and they are normally provided with heating means to enable adjusting the water to the desired use temperature if needed. If the water reaching the auxiliary system, coming from the outer tank, comprises the required use temperature, then it will not be necessary to turn on the heating means of said auxiliary system. Therefore, if the tank located outside the building is able to meet the required water consumption, it will not be necessary to turn on the auxiliary heating means arranged in the auxiliary system, and therefore there will be considerable overall cost savings. As previously discussed, the tank 1 according to the invention is suitable for meeting a high sanitary water consumption demand, and the tank 1 therefore contributes to reducing total costs needed to adjust sanitary water to the desired consumption temperature.

In the tank 1 of the invention, the hot water, i.e., the water ready for use thereof, does not have to gradually ascend as the tubular segments 3 are filled, but rather as a result of the bridge conduit 7 it heads directly for the outlet 6.

When the user demands hot water, if there is not enough hot water in the tank 1 at that time, more water has to be heated and it is necessary to endeavor that said already heated water reaches the last segment 3z where the outlet 6 is located as quickly as possible, and that is achieved as a result of the tank 1 of the invention. Furthermore, this configuration of the invention also contributes to improving boiler performance because hot and cold water circulation inside the tank 1 is directed better due to the chimney or thermal convection effect, the temperature of the hot water being greater than the temperature of the cold water. In the context of the invention, the definition of the stack effect is the tendency of a fluid, in this case water, to rise when heated due to its decreased density.

In static operation of the tank 1, i.e., when there is no water demand and therefore pressurized water from the supply system does not enter through the main intake 5, the hot water, heated by heating means (not shown in the drawings), is led due to the chimney effect directly to the last tubular segment 3z where the main outlet 6 is arranged as a result of the bridge conduit 7. The hot water ascending to the last tubular segment 3z makes the cold water stored in said segment 3z, i.e., the water at a lower temperature, descend through the tubular segments 3 one by one through the corresponding passage ports 9 such that during its descent, the water circulates in a zigzag path of travel through the tubular segments 3, as depicted in Figure 2 by means of arrows. With the configuration of the tank 1 of this embodiment, energy efficiency of the tank 1 is improved because both the circuit of the hot water flow and the cold water flow are directed in a controlled and orderly manner, the temperature of the hot water being greater than the temperature of the cold water. In Figure 2 the thicker arrows simulate the hot water flow and the thinner arrows simulate the cold water flow.

In a dynamic operation of the tank 1, i.e., when there is a water demand and therefore water is discharged through the main outlet 6 and pressurized water enters from the supply system through the main intake 5, entry to the bridge conduit 7 is closed to prevent the water entering through said main intake 5, which is supposedly at a lower temperature and therefore considered cold water, from being able to reach the last tubular segment 3z without having been heated. In this case, and only while water from the supply system is introduced through the main intake 5, the process is inverted. When water from the supply system is no longer supplied to the tank 1, the latter immediately works again according to the static operation described above.

To prevent water from the supply system entering the tank 1 through the main intake 5 from ascending directly through the bridge conduit 7, i.e., before it is heated by the heating means arranged in the tank body 2, the tank 1 comprises a gate 8 cooperating with the main intake 5 and with the inlet port 7e. Said gate 8 is a tilting gate, but another type of gate is not ruled out either, such as a sliding gate, for example. In the non-limiting example of the invention, the heating means are preferably arranged inside the first tubular segment 3a and preferably comprise resistive means, for example electrical resistors, or a heat exchanger. In a preferred embodiment of the invention, the heating means used are a solar heat exchanger.

The gate 8 of the tank 1 according to the preferred embodiment of the invention comprises a thrusting section 8b and a closing section 8a such that in a rest position, depicted in Figure 5B, the closing section 8a does not close the inlet port 7e, allowing the passage of water towards the bridge conduit 7. In this case, it is considered that the gate 8 is open. In contrast, when the thrusting section 8b is thrust by the water entering through the main intake 5, the gate 8 pivots with respect to a rotating shaft 12, enabling the rotation of said gate 8 such that it brings about the latter switching to the active position, depicted in Figure 5A, in which the closing section 8a closes the inlet port 7e, blocking the passage of water towards the bridge conduit 7. In this case, it is considered that the gate 8 is closed.

As shown in the example of Figures 5A and 5B, the main intake 5 is arranged in this embodiment below the inlet port 7e.

In the preferred embodiment of the invention, the center of gravity of the gate 8 is arranged below the rotating shaft 12, at least in the active position, such that when water does not enter through the main intake 5 the gate 8 returns to its rest position due to the effect of gravity. In the non-limiting example of Figures 5A and 5B, the closing section 8a comprises a gasket 8c to facilitate and secure the closure against the inlet port 7e.

In an alternative not contemplated in the drawings, the gate 8 comprises elastic means, preferably a torsion spring, enabling said gate 8 to return to the rest position when water from the supply system does not enter through the main intake 5. When pressurized water enters through said main intake 5, the water thrusts the thrusting section 5b, overcoming the force of the elastic means and allowing the gate 8 to rotate about the rotating shaft 12, enabling the closing section 8a to close the inlet port 7e. When water from the supply system no longer enters, the elastic means enable the gate 8 to return to the rest position, allowing the passage of water from the tank body 2 towards the inlet port 7e.

In the static operation of the tank 1 according to any of the described embodiments, the gate 8 is open, i.e., in rest, and the hot water (heated by the heating means) ascends through the bridge conduit 7 due to the chimney (or convection) effect. In contrast, in dynamic operation, the gate 8 is in an active position, i.e., closed, blocking the entrance of water into the bridge conduit 7.

The gate 8 of the preferred embodiment of the invention is made of stainless steel although other materials such as plastic for plumbing purposes, also referred to as PPSU, or the like are not ruled out.

The main intake 5, the main outlet 6, the inlet port 7e, the passage port 9 as well as any other necessary connection are arranged in at least one of the covers 4A or 4B of the tank 1. Therefore, in the non-limiting example of Figure 1, the main intake 5, the inlet port 7e and the outlet port 6 main are arranged in the cover 4A whereas the passage ports 9, which allow communicating two contiguous tubular segments 3 to one another, are arranged both in cover 4A and in cover 4B, laying out the zigzag circuit shown in Figure 2, for which said passage ports 9 are arranged at alternating ends of contiguous tubular segments 3, there being a single passage port 9 for each segment 3.

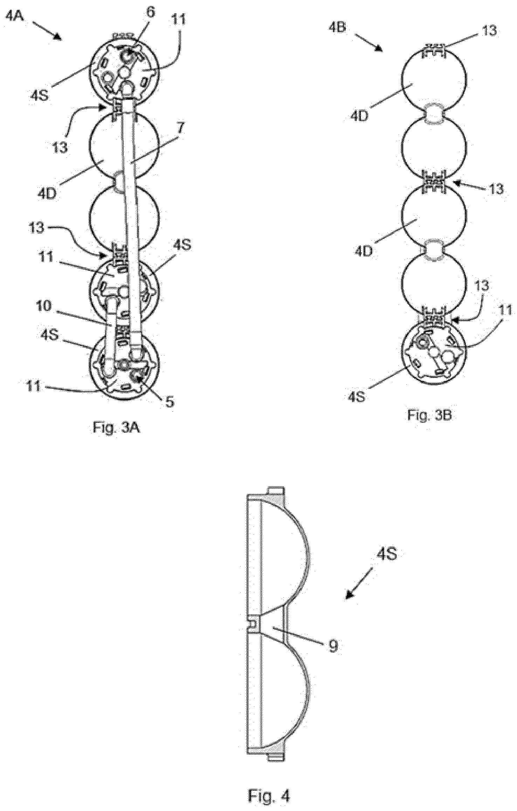

As can be seen in the examples of Figures 3A and 3B, each cover 4A and 4B comprises at least one double cover 4D, enabling closure of two contiguous segments 3, and at least one single cover 4S enabling closure of a tubular segment 3. Said double cover 4D and said single cover 4S are attached to one another by attachment means, preferably quick brass dovetail-type attachment means 13, although attachments of another type, such as screwed attachments, for example, are not ruled out. Figures 3A and 3B show such dovetail-type attachment 13.

In another variant of the invention, not shown in the drawings, each cover 4A and 4B could be formed by a single part, but it would thereby be more difficult to customize tanks 1, i.e., it would be much more costly and complex to design different connections for different tanks 1.

Each single cover 4S of any of the covers 4A or 4B comprises a cap 11 that can comprise as many connections as needed. Therefore, a cap 11 can comprise the main intake 5, or the main outlet 6, or the inlet port 7e, or the passage port 9, or any other necessary connection, or any possible combination. The cap 11 can be an integral part of the single cover 4S or it can be an additional part that is attached to the single cover 4S by attachment means, such as screws for example. In the example of the drawings, each single cover 4S comprises the corresponding cap 11 attached by attachment means (not shown in the drawing).

Figure 3A shows a front view of the cover 4A of the tank 1 according to the preferred embodiment of the invention and Figure 3B shows a front view of the cover 4B of the tank 1. As can be seen in Figure 3A, the cover 4A comprises a double cover 4D and three single covers 4S. The single cover 4S of the cover 4A associated with the first tubular segment 3a comprises the cap 11, said cap 11 comprising the main intake 5, the inlet port 7e (which is associated with one of the ends of the bridge conduit 7), a connection, not shown in the drawings, necessary for enabling passage of the heating means, and a connection to allow connecting the end of an additional bridge conduit 10 that will be described in detail below.

The cap 11 of the single cover 4S associated with the last tubular segment 3z of the cover 4A of Figure 3A comprises the main outlet 6 and the connection for the other end of the bridge conduit 7. The cap 11 of the single cover 4S of the cover 4A associated with a second tubular segment 3b comprises the connection to allow connecting the other end of said additional bridge conduit 10. The cap 11 of the single cover 4S of the cover 4B associated with the first tubular segment 3a comprises a connection, not shown in the drawings, necessary for enabling passage of the heating means. The rest of the ends of the segments 3 will be closed with double covers 4D.

The caps 11 of the single covers 4S allow designing the covers 4A and 4B in a simple and cost-effective manner without complicating the design of the covers 4A or 4B themselves, being able to customize said covers 4A and 4B as desired to obtain the desired "hot water" and "cold water" circuit, or to even allow incorporating auxiliary means such as additional heating means in a simple and effective manner.

Figures 5A and 5B depict a section view of the cap 11 of the single cover 4S of the cover 4A of Figure 3A associated with the first tubular segment 3a. Said cap 11 comprises the main intake 5, the inlet port 7e and the gate 8 described above. One end of the bridge conduit 7 is coupled to the inlet port 7e. Figure 5A corresponds with the active position of said gate 8, i.e., with the gate 8 closed, and Figure 5B corresponds with the rest position of the gate 8, i.e., with the gate 8 open. In a non-limiting embodiment of the invention, to favor operation of the gate 8 and minimize its path of travel, the inlet port 7e comprises an inlet opening 7e' which cooperates with the closing section 8a of the gate 8 and is arranged at an angle between about 55° and 75°, preferably about 70°, with respect to the longitudinal axis 13 of the inlet port 7e. Likewise, the main intake 5 also comprises an inlet opening 5' which cooperates with the thrusting section 8b of the gate 8 and is arranged at an angle between about -55° and -75°, preferably about -70°, with respect to the longitudinal axis 14 of the intake 5. The inlet opening 7e' of the inlet port 7e and the inlet opening 5' of the main intake 5 in this non-limiting example are not arranged parallel to one another.

Operation of the tank 1 of Figure 2, i.e., static operation of the tank 1, will be described below. The water of the first tubular segment 3a heated by the heating means arranged in said first segment 3a ascends through the bridge conduit 7 towards the last tubular segment 3z due to the convection effect. Said water, i.e., the water at a higher temperature, makes the water at a lower temperature stored in said last segment 3z move, making it descend. It is thereby assured that the water at a higher temperature is always located in the last tubular segment 3z, i.e., close to the main outlet 6. The water descends through the passage port 9 of the double cover 4D of the cover 4B, goes through the corresponding tubular segment 3 and descends through the passage port 9 of the double cover 4D arranged at the opposite end, i.e., arranged in the cover 4A. The water again goes through the corresponding segment 3 and descends through the passage port 9 of the double cover 4D arranged at the end of said segment 3, i.e., arranged in cover 4B. The water likewise goes through the corresponding segment 3, in this case the second segment 3b, and descends through the passage port 9 arranged at the opposite end of the second segment 3a, i.e., arranged in cover 4A. In this case, it is not possible to arrange the passage port 9 in a double cover 4D because single covers 4S have been arranged at the ends of the first segment 3a in order to provide the tank with the necessary connections. Therefore, the additional bridge conduit 10 has been arranged to enable the passage port 9 communicating the second segment 3b and the first segment 3a. During its return, the water is heated again in said first tubular segment 3a and sent again to the last tubular segment 3z due to the convection or chimney effect, thereby establishing an internal circuit assuring at all times that the water at a higher temperature is stockpiled close to the outlet 6.

Figure 4 depicts a section view of one of the double covers 4D, which can be part of both cover 4A and cover 4B. As seen in said drawing, the double cover 4D comprises two hollow half-spheres communicated to one another by means of a channel defining the passage port 9. Each half-sphere is associated with the end of a 3 tubular segment.

When the user demands hot water, water in the tank 1 is discharged through the main outlet 6 and replenished by adding water from the supply system through the main intake 5. Said incoming water, like the water returning through the return circuit, is heated in the first tubular segment 3a and led directly to the last tubular segment 3z, i.e., close to the main outlet 6, once the tank 1 switches to static operation, in minimal time, whereby facilitating the ability of the tank 1 according to any of the described embodiments to meet the sanitary water demand without having to turn on additional heating means arranged in devices attached downstream, for example in a boiler, taking into account the cost savings this entails.

## Claims

1. Tank for storing hot water, comprising a tank body (2) where the water is stored, said tank body comprising a plurality of hollow tubular segments (3) which are arranged adjacent and attached to one another forming rows such that a first tubular segment (3a) is arranged in a first row and a last tubular segment (3z) is arranged in a last row, higher than the first row, a cover (4A, 4B) at each end of the tank body (2) enabling closure of the tank (1), a main intake (5) arranged in the first tubular segment (3a) and through which pressurized water is introduced into the tank (1), preferably from the supply system, and a main outlet (6) arranged in the last tubular segment (3z) and through which water is discharged from the tank (1) for use thereof, allowing the communication between two contiguous tubular segments (3) through passage ports (9) arranged in at least one of the covers (4A, 4B), **characterized in that** the first tubular segment (3a) and the last tubular segment (3z) of the plurality of segments (3) are communicated through a bridge conduit (7) which is arranged on one of the sides of the tank (1).

2. Tank according to claim 1, wherein said bridge conduit (7) is arranged on the side of the tank (1) where the main intake (5) is arranged, one end of said bridge conduit (7) being associated with an inlet port (7e) which is in turn associated with the first tubular segment (3a) and the other end is associated with the last tubular segment (3z).

3. Tank according to claim 2, wherein the tank (1) comprises a tilting gate (8) cooperating with the main intake (5) and with the inlet port (7e).

4. Tank according to claim 3, wherein said gate (8) comprises a thrusting section (8b) and a closing section (8a) such that in a rest position in which the gate (8) is open, the closing section (8a) does not close the inlet port (7e), allowing the passage of water towards the bridge conduit (7), and in an active position in which the gate (8) is closed, the closing section (8a) closes the inlet port (7e), blocking the passage of water towards the bridge conduit (7).

5. Tank according to claim 4, wherein the center of gravity of the gate (8) is arranged below a rotating shaft (12), at least in the active position, such that when water does not enter through the main intake (5), the gate (8) returns to its rest position due to the effect of the gravity.

6. Tank according to claim 4, wherein the gate (8) comprises elastic means, preferably a torsion spring, enabling said gate (8) to return to the rest position when water does not enter through the main intake (5).

7. Tank according to any of claims 2 to 6, wherein the main intake (5) is arranged below the inlet port (7e).

8. Tank according to any of claims 2 to 7, wherein the main intake (5), the main outlet (6), the inlet port (7e), the passage port (9) and/or any other necessary connection are arranged at least in one of the covers (4A, 4B).

9. Tank according to any of the preceding claims, wherein the passage ports (9) are arranged at alternating ends of contiguous segments (3) such that the water circulates in a zigzag circuit through said tubular segments (3).

10. Tank according to claim 9, wherein each cover (4A, 4B) comprises at least one double cover (4D) enabling closure of two contiguous segments (3), and at least one single cover (4S) enabling closure of a segment (3), said double cover (4D) and said single cover (4S) being attached to one another.

11. Tank according to claim 10, wherein the passage port (9) between two contiguous segments (3) is made through a double cover (4D).

12. Tank according to claim 10, wherein the passage port (9) between the first tubular segment (3a) and the second tubular segment (3b) is made through an additional bridge conduit (10).

13. Tank according to any of claims 10 to 12, wherein each single cover (4S) comprises a cap (11) comprising the main intake (5), or the main outlet (6), or the passage port (9), or any other necessary connection, or any possible combination among them.

14. Tank according to any of the preceding claims, which also comprises heating means for heating the water intended for being stockpiled in the tank (1), said heating means being arranged preferably inside the first tubular segment (3a).

15. Tank according to claim 15, wherein said heating means comprise resistive means or a heat exchanger.

## Patentansprüche

1. Tank zur Speicherung von heißem Wasser, umfassend einen Tankkörper (2), in dem das Wasser gespeichert ist, wobei der Tankkörper eine Vielzahl von hohlen rohrförmigen Segmenten (3) umfasst, die benachbart angeordnet und aneinander befestigt sind und Reihen bilden, so dass ein erstes rohrförmiges Segment (3a) in einer ersten Reihe und ein letztes rohrförmiges Segment (3z) in einer letzten Reihe angeordnet ist, die höher als die erste Reihe ist, wobei eine Abdeckung (4A, 4B) an jedem Ende des Tankkörpers (2) den Verschluss des Tanks (1) ermöglicht, wobei ein Haupteinlass (5), der im ersten rohrförmigen Segment (3a) angeordnet ist, und durch den Druckwasser in den Tank (1) eingeführt wird, vorzugsweise aus dem Versorgungssystem, und ein Hauptauslass (6), der im letzten rohrförmigen Segment (3z) angeordnet ist, und durch den Wasser aus dem Tank (1) zur Verwendung davon ausströmt, die Kommunikation zwischen zwei benachbarten rohrförmigen Segmenten (3) durch Durchgangsöffnungen (9) ermöglicht, die in mindestens einer der Abdeckungen (4A, 4B) angeordnet sind, **dadurch gekennzeichnet, dass** das erste rohrförmige Segment (3a) und das letzte rohrförmige Segment (3z) der Vielzahl von Segmenten (3) durch eine Brückenleitung (7) verbunden sind, die auf einer der Seiten des Tanks (2) angeordnet ist.

2. Tank nach Anspruch 1, wobei die Brückenleitung (7) auf der Seite des Tanks (1) angeordnet ist, auf der der Haupteinlass (5) angeordnet ist, wobei ein Ende der Brückenleitung (7) mit einer Einlassöffnung (7e) assoziiert ist, die ihrerseits mit dem ersten rohrförmigen Segment (3a) assoziiert ist, und das andere Ende mit dem letzten rohrförmigen Segment (3z) assoziiert ist.

3. Tank nach Anspruch 2, wobei der Tank (1) ein Kipptor (8) umfasst, die mit dem Haupteinlass (5) und mit der Einlassöffnung (7e) zusammenarbeitet.

4. Tank nach Anspruch 3, wobei das Tor (8) einen Schubabschnitt (8b) und einen Verschlussabschnitt (8a) umfasst, so dass in einer Ruheposition, in der das Tor (8) offen ist, der Verschlussabschnitt (8a) die Einlassöffnung (7e) nicht schließt, wodurch der Durchgang von Wasser hin zur Brückenleitung (7) ermöglicht wird, und in einer aktiven Position, in der das Tor (8) geschlossen ist, der Verschlussabschnitt (8a) die Einlassöffnung (7e) schließt, wodurch der Durchgang von Wasser hin zur Brückenleitung (7) blockiert ist.

5. Tank nach Anspruch 4, wobei der Schwerpunkt des Tors (8) unter einer Drehwelle (12) angeordnet ist, mindestens in der aktiven Position, so dass, wenn Wasser nicht durch den Haupteinlass (5) eintritt, das Tor (8) aufgrund der Wirkung der Schwerkraft in seine Ruheposition zurückkehrt.

6. Tank nach Anspruch 4, wobei das Tor (8) ein elastisches Mittel umfasst, vorzugsweise eine Torsionsfeder, die dem Tor (8) ermöglicht, in die Ruheposition zurückzukehren, wenn Wasser nicht durch den Haupteinlass (5) eintritt.

7. Tank nach einem der Ansprüche 2 bis 6, wobei der Haupteinlass (5) unter der Einlassöffnung (7e) angeordnet ist.

8. Tank nach einem der Ansprüche 2 bis 7, wobei der Haupteinlass (5), der Hauptauslass (6), die Einlassöffnung (7e), die Durchgangsöffnung (9) und/oder jede andere notwendige Verbindung mindestens in einer der Abdeckungen (4A, 4B) angeordnet sind.

9. Tank nach einem der vorhergehenden Ansprüche, wobei die Durchgangsöffnungen (9) an alternierenden Enden von benachbarten Segmenten (3) angeordnet sind, so dass das Wasser in einer Zigzackleitung durch die rohrförmigen Segmente (3) zirkuliert.

10. Tank nach Anspruch 9, wobei jede Abdeckung (4A, 4B) mindestens eine doppelte Abdeckung (4D) umfasst, die den Verschluss von zwei benachbarten Segmenten (3) ermöglicht, und mindestens eine einfache Abdeckung (4S), die den Verschluss eines Segments (3) ermöglicht, wobei die doppelte Abdeckung (4D) und die einfache Abdeckung (4S) aneinander befestigt sind.

11. Tank nach Anspruch 10, wobei die Durchgangsöffnung (9) zwischen zwei benachbarten Segmenten (3) durch eine doppelte Abdeckung (4D) durchgeführt ist.

12. Tank nach Anspruch 10, wobei die Durchgangsöffnung (9) zwischen dem ersten rohrförmigen Segment (3a) und dem zweiten rohrförmigen Segment (3b) durch eine zusätzliche Brückenleitung (10) durchgeführt ist.

13. Tank nach einem der Ansprüche 10 bis 12, wobei jede einzelne Abdeckung (4S) eine Kappe (11) umfasst, umfassend den Haupteinlass (5) oder den Hauptauslass (6) oder die Durchgangsöffnung (9) oder jede andere notwendige Verbindung oder jede mögliche Kombination zwischen ihnen.

14. Tank nach einem der vorhergehenden Ansprüche, der auch Heizmittel umfasst, um das Wasser zu heizen, das dazu vorgesehen ist, um im Tank (1) gespeichert zu werden, wobei das Heizmittel vorzugsweise innerhalb des ersten rohrförmigen Segments (3a) angeordnet ist.

15. Tank nach Anspruch 15, wobei das Heizmittel Widerstandsmittel oder einen Wärmetauscher umfasst.

## Revendications

1. Réservoir de stockage d'eau chaude, comprenant un corps de réservoir (2) dans lequel l'eau est stockée, ledit corps de réservoir comprenant une pluralité de segments tubulaires creux (3) qui sont disposés de façon adjacente à et reliés les uns aux autres en formant des rangées de telle sorte qu'un premier segment tubulaire (3a) soit disposé dans une première rangée et qu'un dernier segment tubulaire (3z) soit disposé dans la dernière rangée, plus haute que la première rangée, un capot (4A, 4B) à chaque extrémité du corps de réservoir (2), qui permet la fermeture du réservoir (1), une admission principale (5) disposée dans le premier segment tubulaire (3a) et à travers laquelle l'eau sous pression est introduite à l'intérieur du réservoir (1), de préférence depuis le système d'alimentation, et une évacuation principale (6) disposée dans le dernier segment tubulaire (3z) et à travers laquelle l'eau est évacuée du réservoir (1) afin de pouvoir être utilisée, et qui permet la communication entre deux segments tubulaires contigus (3) par le biais d'orifices de passage (9) disposés dans au moins l'un des capots (4A, 4B), **caractérisé en ce que** le premier segment tubulaire (3a) et le dernier segment tubulaire (3z) de la pluralité de segments (3) communiquent par un conduit de jonction (7) qui est disposé sur l'un des côtés du réservoir (1).

2. Réservoir selon la revendication 1, dans lequel ledit conduit de jonction (7) est disposé sur le côté du réservoir (1) sur lequel se trouve l'admission principale (5), une extrémité dudit conduit de jonction (7) étant associée à un port d'admission (7e) qui est lui-même associé au premier segment tubulaire (3a), et l'autre extrémité étant associée au dernier segment tubulaire (3z).

3. Réservoir selon la revendication 2, dans lequel le réservoir (1) comprend un clapet à inclinaison (8) coopérant avec l'admission principale (5) et le port d'admission (7e).

4. Réservoir selon la revendication 3, dans lequel ledit clapet (8) comprend une section de poussée (8b) et une section de fermeture (8a) de sorte que, en position de repos dans laquelle le clapet (8) est ouvert, la section de fermeture (8a) ne ferme pas le port d'admission (7e), permettant le passage de l'eau vers le conduit (7), et, en position active dans laquelle le clapet (8) est fermé, la section de fermeture (8a) ferme le port d'admission (7e), bloquant le passage de l'eau en direction du conduit (7).

5. Réservoir selon la revendication 4, dans lequel le centre de gravité du clapet (8) se trouve en-dessous d'un axe de rotation (12), au moins dans la position active, de sorte que, lorsque l'eau n'entre pas par l'admission principale (5), le clapet (8) retourne en position de repos sous l'effet de la gravité.

6. Réservoir selon la revendication 4, dans lequel le clapet (8) comprend un moyen élastique, de préférence un ressort de torsion, permettant audit clapet (8) de revenir en position de repos lorsque l'eau n'entre pas par l'admission principale (5).

7. Réservoir selon l'une quelconque des revendications 2 à 6, dans lequel l'admission principale (5) est placée en-dessous du port d'admission (7e).

8. Réservoir selon l'une quelconque des revendications 2 à 7, dans lequel l'admission principale (5), l'évacuation principale (6), le port d'admission (7e), le port de passage (9) et/ou toute autre connexion nécessaire sont placés au moins dans l'un des capots (4A, 4B).

9. Réservoir selon l'une quelconque des revendications précédentes, dans lequel les ports de passage (9) sont disposés aux extrémités alternées des segments contigus (3) de sorte que l'eau circule dans un circuit en zigzag au sein desdits segments tubulaires (3).

10. Réservoir selon la revendication 9, dans lequel chaque capot (4A, 4B) comprend au moins un double capot (4D) permettant la fermeture de deux segments contigus (3), et au moins un seul capot (4S) permettant la fermeture d'un segment (3), ledit double capot (4D) et ledit capot unique (4S) étant reliés l'un à l'autre.

11. Réservoir selon la revendication 10, dans lequel le port de passage (9) situé entre deux segments contigus (3) est créé au sein d'un double capot (4D).

12. Réservoir selon la revendication 10, dans lequel le port de passage (9) situé entre le premier segment tubulaire (3a) et le second segment tubulaire (3b) est créé au sein d'un conduit de jonction supplémentaire (10).

13. Réservoir selon l'une quelconque des revendications 10 à 12, dans lequel chaque capot unique (4S) comprend un bouchon (11) comprenant l'admission principale (5), ou l'évacuation principale (6), ou le port de passage (9), ou toute autre connexion nécessaire, ou n'importe quelle combinaison possible de ceux-ci.

14. Réservoir selon l'une quelconque des revendications précédentes, qui comprend également un moyen de chauffage destiné à chauffer l'eau destinée à être stockée dans le réservoir (1), ledit moyen de chauffage étant de préférence disposé à l'intérieur du premier segment tubulaire (3a).

15. Réservoir selon la revendication 15, dans lequel ledit moyen de chauffage comprend un moyen résistif ou un échangeur thermique.
